# EUROPEAN PATENT APPLICATION

(11) **EP 4 769 194 A1**
(43) Date of publication of application: **01.07.2026**
(21) Application number: 25197474.7
(22) Date of filing: 21.08.2025
(51) Int. Cl.: G06F 21/62, G06N 20/00, G06Q 30/0201, G06Q 30/0251, G06Q 30/0601, G06N 3/045, G06N 3/047, G06N 3/0475, G06N 3/08, G06N 3/084, G06N 5/04, G06N 7/01, G06N 20/20

(54) **SYNTHETIC DATA GENERATION FOR SERVICE RECOMMENDATION**

(30) Priority: 26.12.2024 US 202419002124
(71) Applicant: Lemon Inc., Grand Cayman, KY1-1205 (KY); Beijing Youzhuju Network Technology Co., Ltd., Beijing 101299 (CN)
(72) Inventor: ZHANG, Yu, Los Angeles, California, 90066 (US); CHEN, Yuxi, Los Angeles, California, 90066 (US); CHEN, Zhihan, Beijing, 100028 (CN); ZHOU, Feiyu, Beijing, 100028 (CN); WANG, Shen, Los Angeles, California, 90066 (US); DU, Zhenze, 018960 Singapore (SG)
(74) Representative: Isarpatent

(57) **Abstract**

Methods, systems, and apparatus, including computer programs encoded on a computer storage medium, for synthetic data generation for service recommendation models. One of the methods includes generating a plurality of synthetic data items, each synthetic data item including user data, context data, service data of a service, and user action data characterizing one or more user actions with respect to the service; for each synthetic data item of the plurality of synthetic data items, processing the synthetic data item using an evaluator to generate a score indicating quality of the synthetic data item; selecting a subset of synthetic data items from the plurality of synthetic data items; and providing the subset of synthetic data items into a service recommendation model for recommending one or more services to one or more users based on the subset of synthetic data items.

## Description

### BACKGROUND

Service recommendation models are machine learning models trained on training data to generate recommendations for services provided to users. For example, an advertisement recommendation model can deliver targeted advertisements to target users. The effectiveness and performance of the service recommendation models rely heavily on training data that the service recommendation models are trained on. In some implementations, user data includes sensitive information (e.g., privacy information) of users. To provide protection of privacy and data security, real or authentic training data can be hard to obtain or unavailable. Consequently, the lack of real training data can pose challenges in training, generating, and evaluating the service recommendation models.

### SUMMARY

This specification describes systems and techniques for generating synthetic data that maintains statistical properties of real data while protecting sensitive information for user privacy. In particular, the systems and techniques include synthetic data generation using randomized and advanced machine learning techniques, synthetic data evaluation, and privacy and diversity enhancements. Therefore, service recommendation models trained on the generated synthetic data can have improved performance and effectiveness.

In general, one innovative aspect of the subject matter described in this specification can be embodied in methods that include the actions of generating a plurality of synthetic data items, each synthetic data item includes user data, context data, service data of a service, and user action data characterizing one or more user actions with respect to the service; for each synthetic data item of the plurality of synthetic data items, processing the synthetic data item using an evaluator to generate a score indicating quality of the synthetic data item, wherein the evaluator includes a pre-trained model trained on training data including a plurality of training real data items, and each training real data item includes real user data, real context data, real service data of the service, and real user action data characterizing one or more real user actions with respect to the service; selecting a subset of synthetic data items from the plurality of synthetic data items, wherein the score for each synthetic data item in the subset of the synthetic data items satisfies a threshold criterion; and providing the subset of synthetic data items into a service recommendation model for recommending one or more services to one or more users based on the subset of synthetic data items. Other embodiments of this aspect include corresponding computer systems, apparatus, and computer programs recorded on one or more computer storage devices, each configured to perform the actions of the methods. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The foregoing and other embodiments can each optionally include one or more of the following features, alone or in combination. In particular, one embodiment includes all the following features in combination. Generating the plurality of synthetic data items includes obtaining a plurality of real data items, each real data item includes real user data, real context data, real service data of the service, real user action data characterizing one or more real user actions with respect to the service; and generating the plurality of synthetic data items by randomizing the plurality of real data items. Generating the plurality of synthetic data items by randomizing the plurality of real data items includes identifying, from the plurality of real data items, a predetermined number of real data items using a nearest neighbor algorithm; and generating the plurality of synthetic data items by randomly combining the predetermined number of real data items. Generating the plurality of synthetic data items includes obtaining a distribution of values of a field of the plurality of synthetic data items, wherein the field is one of the user data, the context data, the service data of the service, and the user action data; and generating the field of each synthetic data item based on the distribution of the values of the field. Obtaining the distribution of the values of the field of the plurality of synthetic data items includes determining the distribution of the values of the field using a plurality of real data items that includes real values of the field. Generating the plurality of synthetic data items includes generating the plurality of synthetic data items using a generative language model. The pre-trained model included in the evaluator is a classification model. Each training real data item includes the real user action data from a third party. The actions can include processing a synthetic data item in the subset of the synthetic data items using an enhancer to generate an enhanced synthetic data item for improved privacy and improved diversity, and wherein providing the subset of synthetic data items into the service recommendation model includes providing the enhanced synthetic data item into the service recommendation model. The service is an advertisement, the one or more user actions with respect to the service include a conversion, the score of the synthetic data item indicates a likelihood that the synthetic data item represents characteristics of the plurality of training real data items, selecting the subset of synthetic data items includes selecting the subset of synthetic data items that likely represent characteristics of the plurality of training real data items. Providing the subset of synthetic data items into the service recommendation model includes providing the subset of synthetic data items for training a prediction model for predicting user actions with respect to the service. Providing the subset of synthetic data items into the service recommendation model includes providing only the subset of synthetic data items into the service recommendation model without using any real data subject to privacy protection.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a diagram of an example system.
FIG. 2 is a flowchart of an example process for generating synthetic data items.
FIG. 3 is a schematic diagram of an example computing system.
Like reference numbers and designations in the various drawings indicate like elements.

### DETAILED DESCRIPTION

This specification relates to systems and techniques for generating synthetic data that can maintain statistical properties of real data while protecting sensitive information for user privacy. In some implementations, for service recommendation models, data can include first-party data that is collected directly from a service provider's users through the service provider's own channels, such as websites, mobile apps, or physical stores. In some implementations, the data can also include third-party data that are collected by a third party, such as an external entity that is separate from or not controlled by a service provider. Third-party data can provide additional information about the users, such as user actions with respect to recommended services, but sometimes the third-party data can have quality and accuracy issues, privacy concerns, and costs. Therefore, in some implementations, the third-party data may not be available or easily accessible to the first party (e.g., a service provider).

In some implementations, systems can generate predicted third-party data from first-party data. In some implementations, the predicted third-party data may not accurately mimic the characteristics of real third-party data. Furthermore, the predicted third-party data generated from first-party data can include sensitive information related to user privacy and thus may not be available for the training and the testing of the service recommendation models.

In some implementations, systems can process authorized third-party data using privacy enhancing technologies (PETs), such as cohort analysis and modeling, differential privacy, federated learning, etc. However, these PETs techniques may face some limitations, such as not being able to ensure that the generated synthetic data maintains the statistical properties of the original data, not being able to effectively protect sensitive user information, or both. In some implementations, sensitive patterns in the data can leak indirectly. For example, noise added by differential privacy, while aiming to obscure individual data points, may allow adversaries to infer private details under specific circumstances, such as by analyzing patterns in aggregate statistics. In some implementations, synthetic data may struggle to replicate the statistical distributions or nuanced patterns of the original data. For instance, federated learning setups, which rely on decentralized data processing, may fail to accurately capture global patterns due to incomplete information exchange between parties.

Particular embodiments of the subject matter described in this specification can be implemented so as to help address some or all of the issues and help realize one or more of the following advantages.

The systems and techniques described in this specification provides a systematic and practical method for generating synthetic data for service recommendation models to protect data privacy and enhance data security. The generated synthetic data can preserve or mimic the statistical properties of real data. The synthetic data can be used to train service recommendation models to provide quality recommendations without completely relying on real data, which provide enhanced protection of user privacy included in the real data. For example, the synthetic data can be used for the training and testing of service recommendation models without the risk of revealing any real data subject to privacy protection. In some implementations, the systems and techniques can screen initially generated synthetic data using an evaluator that is trained on real data including third-party data, and can select synthetic data that likely represent characteristics of the real data.

In some implementations, synthetic data items can be generated without using any real data, and a subset of the synthetic data items that mimics statistical properties of real data can be selected using an evaluator that was trained on real data. In some implementations, synthetic data items can be generated based on first-party data without using third-party data, and a subset of the synthetic data items that mimics statistical properties of third-party data can be selected using an evaluator that was trained on third-party data. In some implementations, synthetic data can be generated when third-party data or first-party data is insufficient or lacks the necessary diversity for training robust models, and the synthetic data can be used to augment the training dataset to improve model performance. In some implementations, synthetic data can be generated to address data imbalance issues, and rare classes or underrepresented patterns in the dataset can be artificially enhanced to better reflect their statistical significance in the training process. In some implementations, synthetic data can be tailored to cover edge cases or unseen scenarios in real-world datasets, enabling models to generalize more effectively and perform well on a wider range of inputs.

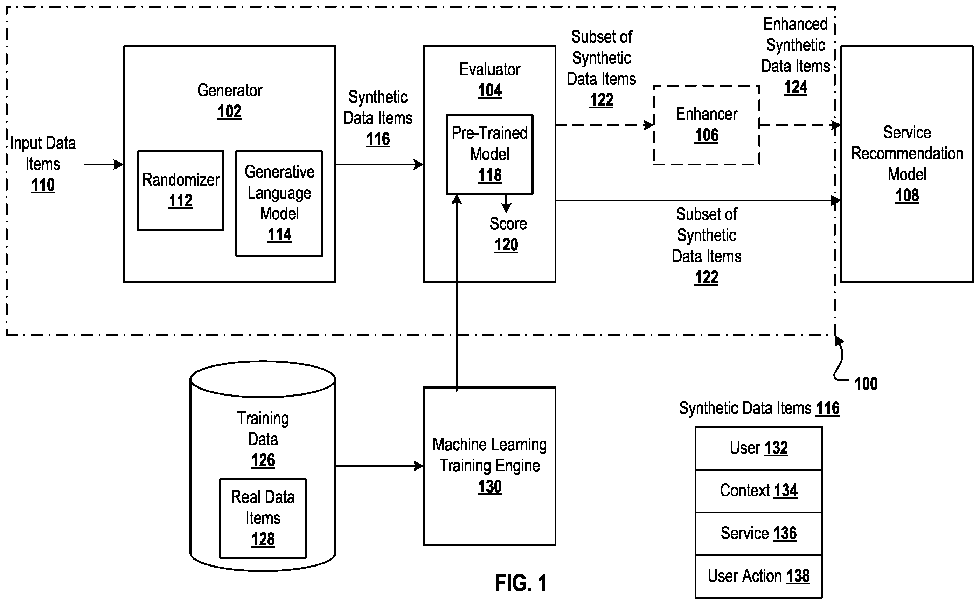

FIG. 1 is a diagram of an example system 100. The system 100 generates synthetic data items 116 for use by a service recommendation model 108. The system 100 includes a generator 102, an evaluator 104, and optionally, an enhancer 106. The generator 102 can generate a plurality of synthetic data items 116. Each synthetic data item 116 can include one or more data fields. For example, the synthetic data item 116 can include data fields such as user data 132, context data 134, service data 136 of a service, and user action data 138 characterizing one or more user actions with respect to the service. In some implementations, the synthetic data item 116 can include fewer, more or different data fields.

The user data 132 describes information of a user that the service is provided to, and can include user identification data, demographic fields, username, locations, user preferences, and so on. The context data 134 can include the environment and the context when the service is provided to the user. For example, context data 134 can include data identifying the time when the service is provided to the user, location of the user, an internet protocol (IP) address of the user device that is processing the service, contents that the user previously viewed, user preference data, data of the friends and other people associated with the user, and so on.

The service data 136 includes data that characterizes a particular service that is provided to the user. For example, the service data 136 can include data for the advertisements that are shown to users, such as digital advertisement delivered to users through user interfaces. The service data can include, for example, keywords and categories of advertisements. The user action data 138 can characterize one or more user actions with respect to the service. The user action data 138 can include a user's behavior or interaction with the service described in the service data 136. For example, the user action data 138 can be a conversion of an advertisement, such as data indicating that the user completed a purchase of a pair of shoes that is advertised in the advertisement shown to the user.

For example, the system 100 can generate synthetic data items that characterize conversions of users for targeted advertising. In targeted advertising applications, a conversion is when a user takes a desired action after interacting with an advertisement, such as making a purchase, signing up for an email list, installing an app, adding payment methods, etc. A synthetic data item for targeted advertising applications can include user data, context data, advertisement data, and conversion data. Thus, the synthetic data item for targeted advertising applications can describe the context in which a conversion occurs when an advertisement is sent to a user. Advertisement recommendation models can be trained on the synthetic data items to help deliver more relevant advertisements to specific audiences.

As another example, the system 100 generates synthetic data items that characterize preferences of users for content recommendation applications, such as music or video streaming services. A synthetic data item for content recommendation applications can include user data, context data, content data, and user action data. Thus, the synthetic data item for content recommendation applications can describe the context in which a user indicated their preference when a content is provided to a user. Content recommendation models can be trained on the synthetic data items to help suggest personalized content to users.

In some examples, the system 100 can generate the synthetic data item 116 having the same target user actions. In some implementations, the user action data 138 can be implicit so that the presence of <user data 132, context data 134, service data 136> indicating one or more target user actions with respect to the service have taken place. For example, the system 100 can be configured to only generate synthetic data items that correspond to conversions for advertisement applications.
The synthetic data item 116 can include three data fields: user data 132, context data 134, and service data 136 of a service. As an example, a format of the synthetic data item 116 can be <user, context, ad>, which indicates the context in which a conversion occurs when the ad is sent to the user.

The generator 102 can generate the synthetic data items 116 using one or more of a randomizer 112, a machine learning model, such as a generative language model 114, or a combination thereof. Other methods or models are also possible for the implementation of the generator 102. In some implementations, the generator 102 can generate synthetic data items 116 using a variety of methods, and each method can be tailored to specific use cases and data requirements. In some implementations, the generator 102 can use machine learning-based techniques, such as Generative Adversarial Networks (GANs) and Variational Autoencoders (VAEs), to produce realistic data by learning underlying distributions. In some implementations, the generator 102 can use one or more generative language models 114, such as a generative pre-trained transformer (GPT), to synthesize textual data. In some implementations, the generator 102 can use statistical methods, such as probabilistic modeling or differential privacy sampling, to mimic data distributions while ensuring privacy. In some implementations, the generator 102 can use one or more rule-based systems, one or more agent-based simulations, or both, to generate data by adhering to predefined constraints or simulating real-world interactions. In some implementations, the generator 102 can use data augmentation techniques, including scaling or paraphrasing, to enhance existing data diversity. In some implementations, the generator 102 can use hybrid approaches that combine machine learning and statistical models to balance data utility and realism. In some implementations, the generator 102 can use these methods collectively to provide flexible solutions for generating synthetic data across different domains.

In some implementations, the generator 102 can generate the synthetic data items 116 using a randomizer 112. In some implementations, the randomizer 112 can generate the synthetic data items without using any input data items. For example, the randomizer 112 can generate the synthetic data items based on a distribution of the values of the fields in the synthetic data items, or by sampling values within a range for the values of the fields in the synthetic data items.

In some implementations, the randomizer 112 can generate the synthetic data items 116 based on input data items 110. The randomizer 112 can obtain the input data items 110 and can generate the plurality of synthetic data items 116 by randomizing the input data items 110. Therefore, by using the randomizer 112, the generator 102 can generate synthetic data items 116 that maintains statistical properties of the input data items while protecting sensitive information included in the input data items.

In some implementations, the input data items 110 can include previously generated synthetic data items by another system. In some implementations, the input data items 110 can include real data items, such as first-party data, third-party data, or a combination of both.

First-party data is data collected directly from a service provider's users through the service provider's own channels, such as websites, mobile apps, or physical stores. In some implementations, the first-party data can include one or more of user data 132, context data 134 (e.g., user demographic data), service data 136, or user action data 138. For example, with permissions from users, a service provider can obtain user identification data (e.g., user data 132), user activities within the channels provided by the service provider (e.g., as the context data 134 or part of user action data 138). For example, a social network service provider can obtain user data that includes user behaviors (e.g., postings, likes, or dislikes) performed within the social network service.

Third-party data is data collected by a third party, such as an external entity that is separate from a service provider. The third party can be, for example, a platform that provides the underlying service (including products) referred to in the advertisement provided by the service provider, or a data agency that has real user interaction data. Third-party data can provide more information about the actual user interactions with the underlying service referred to in the advertisement (e.g., whether and how the user purchases the services). In some implementations, the third-party data can be a source of the user action data 138. In some implementations, the third-party data can also provide one or more of user data 132, context data 134, and service data 136.

In some implementations, the data from the third party may not be accessible or available to the first party (the service provider), for example, due to proprietary, privacy, cost, and other issues. For example, after a user of a social network service clicks on an advertisement displayed on the social network platform of the social network service provider, a browser can open a website of a third-party online store selling goods that the advertisement advertises. Data of user actions performed at the third-party online store are third-party data belonging to the third-party online store and might be protected by the privacy agreements between the users and the third-party online store. Therefore, a service provider cannot directly obtain the data of user actions performed at the third-party online store.

In some implementations, the third-party data may not be available for the generator 102, and the generator 102 can generate the synthetic data items 116 using only the first-party data. In some cases, the third-party data can have quality and accuracy issues, privacy concerns, and costs. In some cases, only a small amount of third-party data is available. Thus, the generator 102 can generate synthetic data items 116 with or without third-party data, for example, using a randomizer 112 or a generative language model 114. The generator 102 can still generate synthetic data items 116 using first-party data.

In some implementations, the generator 102 can generate synthetic third-party data without direct access to real third-party data by using techniques that model the relationships between first-party and third-party datasets while safeguarding privacy. In some implementations, the generator 102 can use machine learning models, such as generative adversarial networks (GANs), variational autoencoders (VAEs), conditional generative models, or a combination of these, to simulate the statistical properties of third-party data. These models can learn a joint distribution of first-party data and hypothetical third-party patterns and the generator 102 can use the models to generate realistic synthetic data based on the learned joint distribution. In some implementations, the generator 102 can use multi-task learning and representation learning to identify correlations between the first party data and the third-party data, and the system 100 can mimic third-party data based solely on the characteristics of the first-party data that is available.

In some implementations, the generator 102 can supplement first-party data using techniques such as feature enrichment, domain adaptation, external knowledge integration, or a combination of these. Feature enrichment technique generates synthetic features that approximate third-party data properties. Domain adaptation technique aligns the first-party data distribution with the third-party domain in a shared latent space. In some implementations, the system 100 can use an evaluator 104 trained on limited real third-party data to validate and refine the generated synthetic data to ensure the synthetic data mirrors the statistical properties of authentic third-party data. More details of the evaluator 104 are discussed herein later in this specification. Using these techniques, the system 100 can generate robust synthetic datasets for data diversity, data accuracy, and stringent privacy considerations.

In some implementations, the randomizer 112 can identify a predetermined number of input data items from the input data items 110 using a nearest neighbor algorithm. The randomizer 112 can generate the plurality of synthetic data items 116 by randomly combining the predetermined number of input data items. In some implementations, under the nearest neighbor algorithm, the system 100 can calculate the distance between a query field in a query data item and corresponding fields of the input data items 110. The distance can be measured by a distance between embeddings of the fields of data items in an embedding space. Embeddings are vectors that represent objects (e.g., images, videos, or texts) in a form that machine learning models can process. Each embedding of a field can characterize features of the object in that field. The system 100 can select a predetermined number (e.g., k) of neighboring data items based on the query data item.

For example, a query data item can include a data item for a given user, and the system 100 can identify k neighbors of the given user based on the query data item. The k-neighbors of the query data item can include k data items. The k data items can include users <user_1, user_2, ..., user_k> that are the k nearest neighbors to the user in the query data item, their contexts <context_1, context_2, ..., context_k>, corresponding advertisements <ad_1, ad_2, ..., ad_k> that are provided to respective users, and corresponding user actions <conversion_1, conversion_2, ..., conversion_k>. As another example, a query data item can include a data item for a target service, such as types, categories or keywords for advertisements. For example, a query data item can include a data item for shoe-related advertisements. The system 100 can identify k neighbors of the given type service (e.g., shoe-related advertisements).

In some implementations, after identifying the predetermined number of neighboring data items to the query data item, the system 100, e.g., the randomizer 112, can determine a combination of the predetermined number of neighboring data items to generate the synthetic data items 116. For example, the randomizer 112 can pick a combination of user_x, context_x, ad_x, and conversion_x to generate the synthetic data items 116, and x is from 1 to k. Therefore, privacy user information cannot be traced or identified from the synthetic data items 116 and data privacy can be further improved.

In some implementations, the randomizer 112 can generate the synthetic data items 116 using one or more randomness algorithms to increase randomness into the synthetic data and further reduce the risk of exposure or leak of sensitivity information. Example randomness algorithms can include probability-flipping algorithms, random sampling from known distributions, and so on. In some implementations, different fields of a data item can use different randomness algorithms.

For example, a probability-flipping algorithm can introduce randomness by flipping values in certain fields based on a predefined probability. For instance, fields that change infrequently, such as IP addresses, can have their values randomly altered with a small probability to mimic real-world variations in user behavior or network conditions.

As another example, random sampling from known distributions algorithm can generate values for fields with well-defined statistical distributions (e.g., age, income, or session durations), by sampling from these distributions. This algorithm can help ensure that the synthetic data closely follows the statistical properties of the original data.

In some implementations, field-specific algorithms can be used that employ tailored randomness techniques for different fields within a data item. For example, categorical fields like user roles or device types may involve weighted random sampling, while numerical fields like transaction amounts may use Gaussian or uniform distributions.

In some implementations, the randomizer 112 can generate the synthetic data items 116 based on a distribution of values of a field of the synthetic data items 116. The generator 102 can obtain a distribution of values of a field of the plurality of synthetic data items. For example, the field can be one of the four data fields: user data 132, context data 134, service data 136 of a service, and user action data 138 characterizing one or more user actions with respect to the service. In some implementations, the system 100 can determine the distribution of the values of the field using a plurality of real data items that include real values of the field. The generator 102 can generate the field of each synthetic data item of the plurality of synthetic data items 116 based on the distribution of the values of the field.

In some implementations, the distribution of the values of the fields can be determined based on first-party data, third-party data, or both. For example, the generator 102 can first calculate a distribution of values of a field of the plurality of input data items 110, such as real data items from first-party data. Based on the distribution of values of the field of the plurality of input data items 110, the generator 102 can generate the field of each synthetic data item of the plurality of synthetic data items 116. For example, the generator 102 can generate demographic fields (such as age) of the synthetic data items 116 based on the historical distribution of the demographic fields. The generator 102 can sample from a distribution that matches the demographics of the historical data times.

In some implementations, the generator 102 can generate time-related fields, such as timestamps, as part of the context data 134, for example, based on a predetermined range of the time. For example, the generator 102 can adjust time-related fields within realistic boundaries, such as randomizing within the same time of day or week, or applying offsets based on historical usage patterns.

In some implementations, the generator 102 can generate the synthetic data items 116 using a generative language model 114. A generative language model 114 is a machine learning (ML) model that generates text content in response to a query. A query is a question or the search for a piece of information. The generative language model 114 can be a very large neural network model and can be trained on vast amounts of data. In some implementations, the generative language model 114 can be a large language model (LLM) configured to process an input sequence of tokens from a vocabulary of text tokens to generate an output sequence of tokens from vocabulary. For example, the generative language model 114 can be a Transformer-based language model neural network or a recurrent neural network-based language model neural network.

The generative language model 114 can receive a query that includes a prompt input for the task of generating synthetic data items. The prompt input can be text, audio, or video data describing the desired characteristics of the synthetic data items. For example, the prompt input can include text data requesting the generative language model 114 to generate synthetic data items that are similar to real data items, but cannot include user privacy data. In some implementations, the prompt input can include examples of the real data items. In some implementations, the prompt input can include text data describing the characteristics of the real data items. Therefore, by using the generative language model 114, the generator 102 can generate synthetic data items 116 that maintains statistical properties of real data while protecting sensitive information. For example, a query for the generative language model 114 can include one or more real data items, each real data item includes user data of a user, service data (e.g., advertisement data of several advertisements provided to the user), context data (e.g., time, date, IP address, applications that the user is using while the advertisements are provided, browsing or purchases histories of the user, etc.), and user action data (e.g., a conversion field indicating that these advertisements have resulted in conversions, e.g., purchases of advertised merchandises). The query for the generative language model 114 can ask the generative language model 114 to generate synthetic data following the same format to mimic the real data items. The generator 102 can generate text data describing synthetic data items for advertisements that the user might be interested in, without using real advertisement data.

For specified applications, such as advertisements, the system 100 can perform targeted training or prompt engineering to the generative language model 114 to address domain-specific requirements. In some implementations, in the context of generating synthetic data for an advertising platform, the system 100 can fine-tune the generative language model 114 on datasets containing anonymized user engagement patterns, such as click-through rates, conversion metrics, or ad view durations. In some implementations, the system can use prompts that explicitly specify characteristics of desired synthetic data. The characteristics of desired synthetic data can include, for example, specific consumer attributes (e.g., age, sex, demographic information or individual consumers or retailers), user engagement patterns, temporal attributes (e.g., a specific day, time, or duration (e.g., holiday reasons)), geographic attributes (e.g., a specific location, a region, a city), service attributes (e.g., a type, brand, or price range of a service or product), etc. For example, the prompt for the generative language model 114 can include text data of "generate synthetic user profiles that mimic high engagement behaviors for a campaign targeting urban millennials," or "simulate ad interactions for a retail category with a conversion rate between 2-5%."

In some implementations, the tailored prompts can include attributes like time-of-day interaction trends, platform-specific user activity (e.g., mobile vs. desktop), demographic-specific preferences, or a combination of these. In some implementations, the generative language model 114 can incorporate constraints to ensure that the synthetic data aligns with compliance requirements, such as excluding sensitive demographic markers while preserving actionable insights for ad optimization. By combining precise training data with detailed prompts, the generated synthetic data can offer practical value while maintaining privacy and satisfying regulatory standards.

In some implementations, the generative language model 114 can generate synthetic data in text format, such as text data for categories and descriptions of advertisements. After the generative language model 114 generates synthetic data in text format, the system 100 can map the synthetic data in text format for a corresponding service. For example, the system 100 can map the categories and descriptions of synthetic advertisement services generated by an LLM to the corresponding advertisements.

The system 100 includes an evaluator 104 that can assess quality of the synthetic data items 116. For each synthetic data item of the plurality of synthetic data items 116, the evaluator 104 processes the synthetic data item to generate a score 120 indicating the quality of the synthetic data item. For example, a synthetic data item with a high score can indicate a high confidence/likelihood of statistical similarity to real data items, and a synthetic data item with a low score can indicate a low confidence/likelihood of statistical similarity to real data items. By selecting synthetic data items using scores 120, the system 100 can ensure effective mimicry of the characteristics of real data items. In some implementations, the score 120 can be a probability that is between 0 and 1, or another value. In some implementations, the evaluator can evaluate the quality of a synthetic data item as a whole to generate the score 120 for the synthetic data item.

In some implementations, the evaluator 104 includes a pre-trained model 118. The pre-trained model 118 was trained on training data 126 using a machine learning training engine 130. The training data 126 can include a plurality of real data items 128. Each real data item of the plurality of real data items 128 includes one or more of real user data, real context data, real service data of the service, and real user action data characterizing one or more real user actions with respect to the service. The real data can have the same or similar format as the synthetic data item 116. In some implementations, the real data items 128 included in the training data 126 can be from a first-party, a third-party, or both. For example, the real data items 128 can include first-party data that the user consented to disclose and third-party data that the user consented to disclose. In some implementations, the real data items 128 for training the model 118 of the evaluator 104 can be the same data included in the input data items 110 for the generator 102. In some implementations, the real data items 128 for training the model 118 of the evaluator 104 can be different from the real data items included in the input data items 110 for the generator 102.

In some implementations, the pre-trained model 118 included in the evaluator 104 can be a classification model. The classification model can use a classification algorithm, such as support vector machines, decision trees, neural networks, or logistic regression models. In some implementations, the pre-trained model 118 can classify a synthetic data item 116 into one of multiple categories, such as conversion vs. non-conversion, or high-quality vs. low-quality.

For example, the evaluator 104 can receive a synthetic data item 116 as input to the pre-trained model 118 that was previously trained on real data items. The pre-trained model 118 can classify the synthetic data item 116 by generating respective probabilities that the synthetic data item 116 belongs to each of the plurality of classes. In some implementations, the evaluator 104 can output the respective probabilities with respect to the plurality of classes. In some implementations, the evaluator 104 can assign the synthetic data item 116 to the class that corresponds to the highest probability among all the probabilities. The highest probability can be the score 120 indicating the quality of the synthetic data item. In some implementations, the score 120 can indicate a level of confidence that the synthetic data item is statistically similar to a target training dataset that the pre-trained model 118 was trained on. For example, synthetic data items classified by the model 118 as having high confidence scores are statistically similar to the training dataset. Thus, the evaluator 104 can ensure effective mimicry of the characteristics of the training dataset, e.g., the training data set that mimics original data, such as third-party data.

In some implementations, all data items in the training data 126 that are used to train the classification model 118 can belong to one class of the multiple classes. For example, the binary classification model 118 can classify whether a synthetic data item is similar to real data or not. The training data 126 for the model 118 includes only real data items 128 and does not include synthetic data items. For example, in targeted advertisement applications, the binary classification model 118 can classify whether a synthetic data item corresponds to a conversion or not. The training data 126 for the model 118 includes real data items 128 that resulted in conversions and does not include data items that did not result in conversions.

The system 100 selects a subset of synthetic data items 122 from the plurality of synthetic data items 116 based on the scores 120, such that the score 120 for each synthetic data item in the subset of the synthetic data items 122 satisfies a threshold criterion. For example, the evaluator 104 can compare the score 120 with a predetermined threshold. If the score 120 is greater than the predetermined threshold, the evaluator 104 can determine that the synthetic data item 116 is a high-quality synthetic data item, indicating close resemblance to real data items. If the score 120 is below the predetermined threshold, the evaluator 104 can determine that the synthetic data item 116 is not a high-quality synthetic data item. In some cases, the system 100 can discard low-quality synthetic data items. In some implementations, the score for each synthetic data item in the subset of the synthetic data items satisfies a threshold criterion such that a threshold number of synthetic data items are selected. For example, 25% of the plurality of synthetic data items 116 that have top scores are selected as the 116 based on the subset of synthetic data items 122.

For example, for a given class C, the system 100 can provide a synthetic data item S as an input to the evaluator 104 that implements a pre-trained model M 118. The pre-trained model M can be previously trained on the training data 126, e.g., an original dataset such as the real data items 128. The pre-trained model M 118 can classify the synthetic data item S and can assign the synthetic data item S a score 120, e.g., a probability, of belonging to class C. The score 120 can be the highest among all classes that the model 118 can classify. If the score 120 is greater than a predefined threshold T, the system 100 can determine that the synthetic data item S likely includes high-quality synthetic data that indicates close resemblance to the training data 126. If the probability is below T, the system 100 can determine that the synthetic data item S likely includes low-quality synthetic data and can determine to discard the synthetic data item S.

In some implementations, the system 100 can use the score 120 in other ways. In some implementations, the system 100 can obtain one or more confidence scores provided by the generator 102, such as scores generated by one or more generative language models 114. The system 100 can use both the one or more confidence scores provided by the generator 102 and the score 120 generated by the evaluator 104 to enhance the selection process for the synthetic data items 116. By combining these two scoring mechanisms, the system 100 can achieve a dual-score approach that provides a more comprehensive assessment of the quality of the synthetic data items 116. For example, the system can select the subset of synthetic data items based on a combination of the generator score and the evaluator score, e.g., a sum or an average of the scores.

In some implementations, the score 120 can indicate a business meaning related to the service provided to the users. For example, the score 120 can indicate a likelihood of conversion for advertisement services. The system 100 can select, from the synthetic data items 116, a subset of synthetic data items 122 that have scores that satisfy a threshold criterion (e.g., larger than a predetermined threshold), indicating a high likelihood of conversion. The system 100 can discard the synthetic data item that has a low likelihood of conversion. In personalized recommendation systems, the score 120 can reflect the relevance of synthetic user behavior characterized in the synthetic data items 116 to specific content categories, and the system can select the synthetic data items based on the scores 120 to ensure tailored suggestions. In fraud detection applications, the score 120 can measure the resemblance of synthetic transactions characterized in the synthetic data items 116 to fraudulent activity. The system can select the synthetic data items based on the scores 120 and can use the selected synthetic data items to aid in robust model training. In healthcare applications, the score 120 can signify the accuracy of synthetic patient data in representing high-risk cases. In financial applications, the score 120 can indicate the probability of default or risk behavior in synthetic loan applicant data. Thus, the system 100 can generate and use synthetic data across industries while maintaining privacy and alignment with business objectives.

The system 100 provides the subset of synthetic data items 122 into a service recommendation model 108 for recommending one or more services to one or more users based on the subset of synthetic data items 122. In some implementations, the system 100 can provide only the subset of synthetic data items 122 into the service recommendation model 108 without using any real data subject to privacy protection. Real data subject to privacy protection can include any real data, such as real data that the users opted to protect or real data that the users did not consent to disclose, or other unauthorized data. For example, the system 100 can provide the subset of synthetic data items characterizing conversions of advertisement applications for an advertisement recommendation model that recommends advertisements to users. Because the subset of synthetic data items 122 can mimic the real data without leaking private information in the real data, the service recommendation model 108 can effectively perform service recommendation, while protecting sensitive user information.

In some implementations, the system 100 can provide the subset of synthetic data items 122 for training a prediction model for predicting user actions with respect to the service. For example, based on the synthetic data items characterizing conversions of users, the system 100 can train an advertisement recommendation model on the synthetic data items for recommending targeted advertisements that have high likelihood of conversions, with reduced amount or without any real data. As such, improved data privacy protection can be provided while providing effective service recommendation.

In some implementations, the system 100 can provide the subset of synthetic data items 122 for making a prediction using a prediction model. For example, the subset of synthetic data items can characterize services that users interacted with, and the system can use the subset of synthetic data items for recommending a target service to a target user. In some implementations, the system 100 can provide the synthetic data items as input to trained models for making predictions, such as recommending services, products, or content based on simulated user interactions, such as clicks or purchases, without exposing real user data. In some implementations, the system 100 can use the synthetic data items to forecast trends, to predict user behaviors or market demands, and to test machine learning models under diverse scenarios to ensure robustness of the models before deployment of the models. For example, in healthcare, synthetic data items can mimic patient profiles and the system 100 can train models on the synthetic data items for personalized treatment recommendations. In finance, the system 100 can use the synthetic data items that replicate transactional patterns to support credit risk assessment. In some implementations, the system 100 can use the synthetic data items to train autonomous systems, such as (autonomous or semi-autonomous) vehicles or robots, by simulating complex environments and interactions using the synthetic data items. Thus, the synthetic data can have enhanced privacy protection while providing high utility for various predictive and analytical tasks.

In some implementations, the system 100 can include an enhancer 106 to further improve privacy protection, to improve the diversity of the synthetic data items, or both, for example, by conducting data perturbation or other techniques. In some implementations, the enhancer 106 can process each synthetic data item in the subset of synthetic data items 122 to generate an enhanced synthetic data item 124 for improved user privacy, improved diversity, or both. The system 100 can provide the enhanced synthetic data items 124 to the service recommendation model 108.

In some implementations, the enhancer 106 can use privacy-enhancing techniques to further improve user privacy in the synthetic data items. For example, the enhancer 106 can use some of the discarded synthetic data items from the evaluator 104 to add randomness in the synthetic data items. In some examples, the enhancer 106 can flip certain bits or fields in the synthetic data following a probability distribution to improve the level of privacy. In some implementations, the enhancer 106 can employ differential privacy, where calibrated noise is added to the synthetic data to obscure individual data points while preserving overall utility. In some implementations, the enhancer 106 can employ synthetic data aggregation, where patterns from multiple synthetic data items are combined to dilute any identifiable features while retaining statistical fidelity. In some implementations, if a synthetic data item deviates significantly from the expected statistical patterns, the enhancer 106 can discard the synthetic data item to prevent potential privacy leaks.

In some implementations, the enhancer 106 can use customized synthetic data to improve diversity of the synthetic data items. For example, the subset of synthetic data items 122 may underrepresent a minority group of users, and the enhancer 106 can add more synthetic data items for the underrepresented minority group of users to improve the diversity and fairness of the synthetic data items.

Although some of the systems and techniques described herein are related to advertisement applications, the systems and techniques described herein are applicable to other types of services and across diverse industries, such as electronic commerce, subscription recommendation, and customer behavior predictions. For instance, in electronic commerce, the system can use synthetic data to train models for personalized product recommendations, inventory management, or dynamic pricing strategies. In subscription recommendation services, the system can use synthetic data to predict user preferences for curated content, to improve retention and customer satisfaction. In customer behavior prediction applications, the system can model purchasing trends, churn likelihood, or user engagement patterns using the synthetic data. In some implementations, the system can use synthetic data to support applications in healthcare by training models for patient diagnosis or treatment recommendations while preserving patient privacy. In finance, the system can use synthetic data to simulate customer transactions for fraud detection or credit risk assessment.

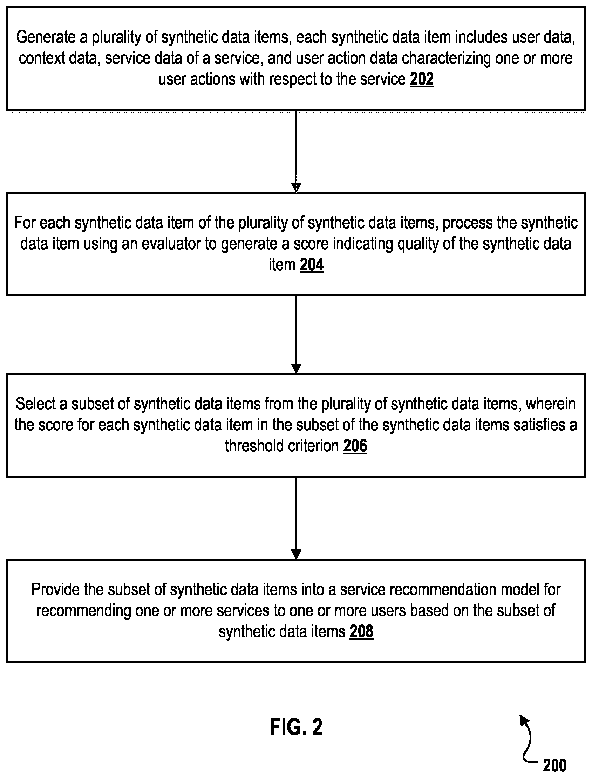

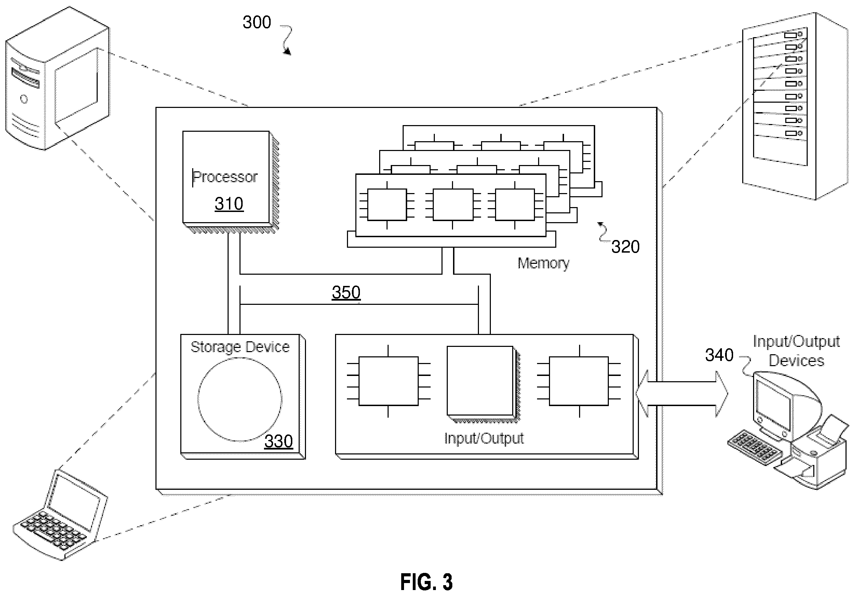

FIG. 2 is a flowchart of an example process 200 for generating synthetic data items. In some implementations, the process 200 can be performed by a first party (e.g., a platform presenting recommended services to users such as an advertisement provider, a social network platform, or a video sharing platform) that may need data from a third party (e.g., a provider of the underlying recommended services). The process 200 will be described as being performed by an appropriately programmed computer system, such as the system 100 of FIG. 1 or a computing system 300 of FIG. 3. The operations shown in process 200 may not be exhaustive and that other operations can be performed as well before, after, or in between any of the illustrated operations. Further, some of the operations may be performed simultaneously, or in a different order than shown in FIG. 2.

The system generates a plurality of synthetic data items (202), for example, according to the example techniques described with respect to the generator 102 of FIG. 1. Each synthetic data item includes user data, context data, service data of a service, and user action data characterizing one or more user actions with respect to the service. In some implementations, the user action data characterizing one or more user actions with respect to the service can be implicit and represented by the user data, the context data, and/or the service data. In some implementations, the system can obtain a plurality of real data items. Each real data item can include one or more of: real user data, real context data, real service data of the service, or real user action data characterizing one or more real user actions with respect to the service. In some implementations, the system can generate the plurality of synthetic data items by randomizing the plurality of real data items.

In some implementations, the system can identify, from the plurality of real data items, a number of real data items using a nearest neighbor algorithm. The system can generate the plurality of synthetic data items by randomly combining the predetermined number of real data items. In some implementations, the system can obtain a distribution of values of a field of the plurality of synthetic data items. The field can be one of the user data, the context data, the service data of the service, and the user action data. The system can generate the field of each synthetic data item based on the distribution of the values of the field. In some implementations, the system can determine the distribution of the values of the field using a plurality of real data items that include real values of the field.

In some implementations, the system can generate the plurality of synthetic data items using a generative language model. The generative language model can receive a prompt input for the task of generating synthetic data items. The prompt input can include text data requesting the generative language model to generate synthetic data items that are similar to real data items, but cannot include user privacy data.

For each synthetic data item of the plurality of synthetic data items, the system processes the synthetic data item using an evaluator to generate a score indicating quality of the synthetic data item (204), for example, according to the example techniques described with respect to the evaluator 104 of FIG. 1. The evaluator includes a pre-trained model trained on training data including a plurality of training real data items. Each training real data item includes one or more of: real user data, real context data, real service data of the service, or real user action data characterizing one or more real user actions with respect to the service.

In some implementations, the pre-trained model included in the evaluator can be a classification model. In some implementations, each training real data item can include the real user action data from a third party.

The system selects a subset of synthetic data items from the plurality of synthetic data items (206), for example, according to the example techniques described with respect to the evaluator 104 of FIG. 1. The score for each synthetic data item in the subset of the synthetic data items satisfies a threshold criterion.

In some implementations, the service can be an advertisement, and the one or more user actions with respect to the service can include a conversion. The score of the synthetic data item can indicate a likelihood that the synthetic data item represents characteristics of the plurality of training real data items. Selecting the subset of synthetic data items can include selecting the subset of synthetic data items that likely represent characteristics of the plurality of training real data items.

In some implementations, synthetic data items can be generated without using any real data, and a subset of the synthetic data items that mimics statistical properties of real data can be selected using an evaluator that was trained on real data. In some implementations, synthetic data items can be generated based on first-party data without using third-party data, and a subset of the synthetic data items that mimics statistical properties of third-party data can be selected using an evaluator that was trained on real third-party data.

In some implementations, the system can process a synthetic data item in the subset of the synthetic data items using an enhancer to generate an enhanced synthetic data item for improved privacy and/or improved diversity. For example, for improved privacy, in some implementations, privacy-enhancing techniques such as differential privacy, data aggregation, and synthetic data filtering can be applied to the synthetic data items to reduce the leak of sensitivity information (e.g., user privacy information). For improved diversity, In some implementations, synthetic data can be generated to address data imbalance issues, for example, by artificially enhancing rare classes or underrepresented patterns in the dataset to better reflect their statistical significance. In some implementations, synthetic data can be tailored to cover edge cases or unseen scenarios in real-world datasets, enabling models to generalize more effectively and perform well on a wider range of inputs. In some implementations, enhancements in both privacy and diversity are performed for the synthetic data to be effectively utilized.

The system provides the subset of synthetic data items into a service recommendation model (e.g., the service recommendation model 108 of FIG. 1) for recommending one or more services to one or more users based on the subset of synthetic data items (208). In some implementations, the system can provide the subset of synthetic data items for training a prediction model for predicting user actions with respect to the service. In some implementations, the system can provide only the subset of synthetic data items into the service recommendation model without using any real data subject to privacy protection. In some implementations, the system can use the subset of synthetic data items for recommending a target service to a target user. For example, some of the subset of synthetic data items can be used for training the prediction model, and some of the subset of synthetic data items can be used for predicting a target service to a target user using the prediction model.

FIG. 3 illustrates a schematic diagram of an example computing system 300. The system 300 can be used for the operations described in association with the implementations described herein. For example, the system 300 may be included in computing devices of the one or more online components and/or the one or more offline components. The system 300 includes a processor 310, a memory 320, a storage device 330, and an input/output device 340, which are interconnected using a system bus 350. The processor 310 is capable of processing instructions for execution within the system 300. In some implementations, the processor 310 is a single-threaded processor. The processor 310 is a multi-threaded processor. The processor 310 is capable of processing instructions stored in the memory 320 or on the storage device 330 to display graphical information for a user interface on the input/output device 340.

The memory 320 stores information within the system 300. In some implementations, the memory 320 is a computer-readable medium. The memory 320 can be a volatile memory unit or a non-volatile memory unit. The storage device 330 is capable of providing mass storage for the system 300. The storage device 330 is a computer-readable medium. The storage device 330 may be a floppy disk device, a hard disk device, an optical disk device, or a tape device. The input/output device 340 provides input/output operations for the system 300. The input/output device 340 includes a keyboard and/or pointing device. The input/output device 340 includes a display unit for displaying graphical user interfaces.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, off-the-shelf or custom-made parallel processing subsystems, e.g., a GPU or another kind of special-purpose processing subsystem. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g., a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer implemented method, comprising:
generating (202) a plurality of synthetic data items, each synthetic data item comprises user data, context data, service data of a service, and user action data characterizing one or more user actions with respect to the service;
for each synthetic data item of the plurality of synthetic data items, processing (204) the synthetic data item using an evaluator to generate a score indicating quality of the synthetic data item, wherein the evaluator comprises a pre-trained model trained on training data comprising a plurality of training real data items, and each training real data item comprises real user data, real context data, real service data of the service, and real user action data characterizing one or more real user actions with respect to the service;
selecting (206) a subset of synthetic data items from the plurality of synthetic data items, wherein the score for each synthetic data item in the subset of the synthetic data items satisfies a threshold criterion; and
providing (208) the subset of synthetic data items into a service recommendation model for recommending one or more services to one or more users based on the subset of synthetic data items.

2. The method of claim 1, wherein generating the plurality of synthetic data items comprises:
obtaining a plurality of real data items, each real data item comprises real user data, real context data, real service data of the service, real user action data characterizing one or more real user actions with respect to the service; and
generating the plurality of synthetic data items by randomizing the plurality of real data items.

3. The method of claim 2, wherein generating the plurality of synthetic data items by randomizing the plurality of real data items comprises:
identifying, from the plurality of real data items, a predetermined number of real data items using a nearest neighbor algorithm; and
generating the plurality of synthetic data items by randomly combining the predetermined number of real data items.

4. The method of claim 1, wherein generating the plurality of synthetic data items comprises:
obtaining a distribution of values of a field of the plurality of synthetic data items, wherein the field is one of the user data, the context data, the service data of the service, and the user action data; and
generating the field of each synthetic data item based on the distribution of the values of the field.

5. The method of claim 4, wherein obtaining the distribution of the values of the field of the plurality of synthetic data items comprises determining the distribution of the values of the field using a plurality of real data items that comprise real values of the field.

6. The method of claim 1, wherein generating the plurality of synthetic data items comprises generating the plurality of synthetic data items using a generative language model.

7. The method of any one of the preceding claims, wherein the pre-trained model comprised in the evaluator is a classification model.

8. The method of any one of the preceding claims, wherein each training real data item comprises the real user action data from a third party.

9. The method of any one of the preceding claims, comprising:
processing a synthetic data item in the subset of the synthetic data items using an enhancer to generate an enhanced synthetic data item for improved privacy and improved diversity, and
wherein providing the subset of synthetic data items into the service recommendation model comprises providing the enhanced synthetic data item into the service recommendation model.

10. The method of any one of the preceding claims, wherein the service is an advertisement, the one or more user actions with respect to the service comprise a conversion, the score of the synthetic data item indicates a likelihood that the synthetic data item represents characteristics of the plurality of training real data items, selecting the subset of synthetic data items comprises selecting the subset of synthetic data items that likely represent characteristics of the plurality of training real data items.

11. The method of any one of the preceding claims, wherein providing the subset of synthetic data items into the service recommendation model comprises providing the subset of synthetic data items for training a prediction model for predicting user actions with respect to the service.

12. The method of any one of the preceding claims, wherein providing the subset of synthetic data items into the service recommendation model comprises providing only the subset of synthetic data items into the service recommendation model without using any real data subject to privacy protection.

13. A computer-implemented system, comprising:
one or more computers; and
one or more computer memory devices interoperably coupled with the one or more computers and having computer-readable storage media storing one or more instructions that, when executed by the one or more computers, perform the method of any of claims 1 to 12.

14. One or more non-transitory computer-readable storage media storing one or more instructions that, when executable by one or more computers, cause the one or more computers to perform the method of any of claims 1 to 12.
